# EUROPEAN PATENT SPECIFICATION

(11) **EP 0 331 143 B1**
(45) Date of publication and mention of the grant of the patent: **22.12.1993**
(21) Application number: 89103574.3
(22) Date of filing: 01.03.1989
(51) Int. Cl.: D21H 19/44

(54) **Coating composition and cast-coated paper coated with same**
Streichmasse und damit beschichtetes Streichgiesspapier
Composition pour enduire et papier ainsi enduit par moulage

(30) Priority: 02.03.1988 JP 47496/88; 02.03.1988 JP 47497/88; 02.03.1988 JP 47498/88; 02.03.1988 JP 47499/88; 02.03.1988 JP 47500/88
(43) Date of publication of application: 06.09.1989
(73) Proprietor: MITSUI TOATSU CHEMICALS, Inc., Chiyoda-Ku Tokyo 100 (JP); OJI PAPER COMPANY LIMITED, Tokyo 104 (JP)
(72) Inventor: Kaneda, Katsumi, Yokohama-shi Kanagawa (JP); Hyugaji, Teruo, Yokohama-shi Kanagawa (JP); Tanaka, Akio, Yokohama-shi Kanagawa (JP); Kuroda, Nobuo, Yonago-shi Tottori (JP); Yamamoto, Itsuro, Yonago-shi Tottori (JP); Matsuda, Noriaki, Yonago-shi Tottori (JP)
(74) Representative: Strehl Schübel-Hopf Groening & Partner

(56) References cited:
- US-A- 4 474 860
- US-A- 4 567 099

## Description

### BACKGROUND OF THE INVENTION

The present invention relates to a coating composition suitable for cast-coated paper capable of being produced at a high speed and the cast-coated paper coated with such a coating composition.

There have been known various methods for manufacturing a cast-coated paper, such as wet cast coating, gel cast coating and rewet cast coating techniques. The wet cast coating is a method which comprises applying a water-based paint containing a pigment and an adhesive to a base paper and directly drying the paper still in wet state by bringing it into contact with a highly heated mirror drum (hereunder referred to as "cast drum"). The gel cast coating is a method which comprises adding a coagulent to the water-based paint, applying the water-based paint to a base paper and bringing the paper still in wet state into contact with the cast drum to dry the same, or a method which comprises applying the water-based paint to base paper, coating a coagulent onto the paper and then bringing the paper still in wet state into contact with the cast drum to dry the same. Furthermore, the rewet cast coating is a method which comprises the steps of applying a water-based paint to a base paper, drying the paper and again wetting it prior to bringing it into contact with the cast drum to dry it. Art paper of high gloss is supercalendered in its dry state, but the cast-coated paper is made smooth while it is still in wet state in other words while the coated layer is still in highly plastic state, in either of these cast coating techniques. Therefore, according to the cast coating technique, a coated surface of high gloss and high smoothness can be obtained.

However, it is of primary importance to release the coated paper from the surface of the cast drum without any trouble after bringing the coated surface containing a great amount of water into contact with the cast drum to dry the same, in order to obtain a coated paper surface having high gloss and free of defects. It has been known that good adhesion to the cast drum surface which is an essential requirement for imparting high gloss to the cast-coated paper leads to substantial reduction in the releasability thereof. Therefore, manufacture of the cast-coated paper having high gloss and substantially free from defects of the coated surface such as pinholes requires an advanced technology. In particular, as the speed of releasing the coated paper from the cast drum is increased to achieve high-speed operation, the resistance encountered during releasing is also increased, the coated film on the paper adheres to the surface of the cast drum and as a result, a partial pick-up of the paper is sometimes observed (hereunder the such defects of the coated paper surface are referred to as "pit(s)"). Accordingly, it is very difficult to obtain a coated paper having uniform gloss and free of defect. Moreover, it is in general required to quickly evaporate moisture of the coated paper on the drum, but when the machine is operated at high speed, the residence time of the coated papaer on the drum is reduced and, therefore, strong drying conditions must be employed to enhance the mobility of vapour. As a result, a novel problem arises. In other words, in the wet cast coating the paint causes boiling which leads to destruction of the coated layer and in the gel cast coating, it becomes difficult to transfer a large amount of water in the gelled coated layer to the base paper, which in turn makes it difficult to hence form a uniform surface. Particularly, in the rewet cast coating, since the coated layer once dried is rewetted to impart plasticity thereto, a rather high pressure should be applied to the coated paper on the drum as compared with the foregoing two cast coating techniques. As a result, small water pools are often formed between the drum surface and the coated film, but sufficient removal thereof through voids of the coated film is quite difficult. This leads to the formation of pits differing from those formed due to pick-up and provides a cast coated paper having a large number of defects.

In order to solve these problems associated with the cast-coated paper as much as possible and to make a high speed production possible while maintaining the quality of coated paper surface, there has been proposed a method in which a coagulant such as a sulfate, nitrate, formate or acetate of a metal such as zinc, aluminum or magnesium is incorporated into a coating composition principally composed of a pigment and an adhesive such as a latex containing a polymer having repeating units derived from an unsaturated carboxylic acid as a functional monomer or casein (see JP-A-60-146097). This document states that metal ions of the coagulant used affect the carboxyl groups of the copolymeric latex to cause coagulation during drying of the coated layer to thus make the coated layer porous and that the porous structure of the coated paper makes the permeation of evaporated moisture easy when the coated paper is rewetted and pressed to the heated cast drum according to the rewet cast coating technique. However, in this method the cast-coated paper having a low surface strength is obtained and also, the production speed is still dissatisfied.

The use of a bimodal polymer latex having two separate and distinct particle size distributions of large size particles in the range of 150 to 1000 nm and small size particles in the range of 15 to 100 nm, wherein each of said distributions comprises particles which are of substantial uniform diameters in a paper coating formulation as disclosed in US-A-4 567 099 and US-A-4 474 860. However, also the formulations proposed therein can also be used at a relatively low production speed.

### SUMMARY OF THE INVENTION

Accordingly, an object of the present invention is to provide a coating composition which makes it possible to improve the conventional method for manufacturing the cast-coated paper, in particular the rewet cast coating method whose production speed is relatively high and to provide the cast-coated paper having a high gloss and high surface strength and free of defects such as the formation of pits and further, having a good releasability from the cast drum and hence, preventing the formation of pits even during an extremely high speed production.

Another object of the present invention is to provide the cast-coated paper excellent in the releasability, gloss, surface strength and free of pits even when it is manufactured at a high speed which has never been achieved in the art.

According to the present invention, there is provided a coating composition for cast-coated paper which comprises mainly a pigment and an adhesive, characterized in that the adhesive comprises per 100 parts by weight of the pigment, (A) 2 to 15 parts by weight of casein; (B) 6 to 18 parts by weight, expressed in solid content, of a rubber latex having an average particle size ranging from 0.1 to 0.3 µm; (C) 3 to 12 parts by weight, expressed in solid content, of an acrylic emulsion or a secondary particle-forming rubber latex having an average particle size ranging from 0.1 to 0.3 µm; and (D) at least one inorganic compound selected from the group consisting of NaCl, Na₂SO₄, ZnO and MgO and at least one organic acid salt selected from the group consisting of formates and acetates of calcium, zinc and magnesium the total amount of the components (A), (B) and (C) being in the range of 18 to 40 parts by weight.

### DETAILED DESCRIPTION OF THE INVENTION

In the present invention the pigments used are not restricted to specific ones and examples thereof include such inorganic pigments as clay, calcium carbonate, titanium white, satin white, aluminum hydroxide, barium sulfate, zinc oxides and magnesium oxides; and organic pigments such as plastic pigments and white urea resin pigments.

Casein used as the component (A) in the invention is preferably milk casein commonly used as a binder for pigment-coated paper. If the amount thereof is less than 2 parts by weight per 100 parts by weight of the pigment, the releasability of the cast-coated paper to which such a paint is applied becomes insufficient and thus the intended high speed production can be attained with substantial difficulty. While if it exceeds 15 parts by weight, the permeability of the coated layer is highly impaired and hence, a lot of pits are formed on the resultant cast-coated paper. The preferred amount of casein (A) ranges from 4 to 12 parts by weight.

Moreover, the rubber type latex as a component (B) of the adhesive is used in an amount of 6 to 18 parts by weight per 100 parts by weight of the pigment. This is because if it is less than 6 parts by weight, the resultant cast-coated paper shows low surface strength and cannot stand practical printing operations, on the other hand, if it is more than 18 parts by weight, the releasability of the coated paper becomes quite low, a lot of pits are formed thereon and, therefore, the intended high speed production is hard to achieve. The preferred amount of the rubber type latex (B) ranges from 7 to 16 parts by weight.

In addition, the acrylic emulsion or secondary particle-forming latex used as a component (C) of the adhesive is used in an amount of 3 to 12 parts by weight per 100 parts by weight of the pigment. The reason of this is that if the amount of the component (C) is less than 3 parts by weight, the adhesion of the cast-coated paper to the drum surface is insufficient, gloss is lowered and a lot of pits are formed, while if the amount exceeds 12 parts by weight, the resulting cast-coated paper shows a low ink receptivity among the printability thereof and thus, a good printing surface cannot be obtained. The preferred amount of the component (C) ranges from 4 to 10 parts by weight.

The sum of the amount of these components (A) to (C) ranges from 18 to 40 parts by weight per 100 parts by weight of the pigment. This is because if it is less than 18 parts by weight, the resulting cast-coated paper has too low surface strength to stand practical printing operations, while it exceeds 40 parts by weight, properties of releasing the cast-coated paper from the drum surface become insufficient and hence, the high speed production thereof becomes very difficult. The preferred ranges from 20 to 35 parts by weight.

The term "rubber latex as a component (B)" herein used is the generic name of the rubber emulsions of copolymers having, as essential components (repeating units), those derived from butadiene and styrene or methyl methacrylate; and, as optional components, those derived from such non-ionic hydrophilic monomers as hydroxyethyl methacrylate, hydroxypropyl methacrylate, acrylamide, N-methylolacrylamide, N-methoxymethylacrylamide, methacrylamide, N-methylolmethacrylamide and N-methoxymethylmethacrylamide; and such anionic monomers as acrylic acid, itaconic acid and methacrylic acid, the total amount of these optional components being not less than 2% by weight, preferably not less than 2% by weight and less than 10% by weight. Diene type monomers such as isoprene and/or 2-chlorobutadiene may also be used instead of or in addition to butadiene. Examples of comonomer components used other than diene type monomers and styrene or methyl methacrylate are such aromatic alkenyl compounds as alpha-methylstyrene, chlorostyrene and such mono-olefin type unsaturated compounds as methyl acrylate, ethyl acrylate, butyl acrylate, 2-ethylhexyl acrylate, glycidyl acrylate, ethyl methacrylate, butyl methacrylate, 2-ethylhexyl methacrylate, glycidyl methacrylate, alkyl fumalates, alkyl itaconates, acrylonitrile, methacrylonitrile and vinyl acetate. These monomers may be used alone or in combination.

The term "acrylic emulsion(s)" herein means those containing (co)polymers composed of repeating units derived from the monomer components listed above in connection with the rubber latex (B) except for diene type monomers, such as aromatic alkenyl compounds, acrylates, acrylamides, unsaturated carboxylic acids and their esters, nitriles and vinyl acetate. These monomers and copolymerizable monomers may be used alone or in combination.

The secondary particle-forming latex used as a component (C) is a latex of polymer composed of repeating units derived from the monomers listed above in connection with the rubber latex (B) provided that the sum of the non-ionic hydrophilic monomers and the anionic monomers is less than 2% by weight, preferably not less than 0.5% by weight and less than 2% by weight. The particle size of the secondary particles can freely be controlled by properly adjusting the total amount of these non-ionic hydrophilic monomers and the anionic monomers within the above defined range.

In the present invention, the average particle size of the latex (B) is restricted to 0.1 to 0.3 x 10⁻⁶m. This is because when the particle size is less than 0.1 µm, the resultant paint has high viscosity, the releasability of the coated paper becomes insufficient and thus, it is difficult to obtain a smooth coated surface free of pits, even if the particle size of the binder (C) according to a preferred embodiment of the invention is limited to 0.5 to 1.5 x 10⁻⁶m. On the other hand, if the average particle size of the latex (B) exceeds 0.3 x 10⁻⁶m, the resulting cast-coated paper to which a paint containing such a latex is applied has a low surface strength and a lot of pits are formed thereon. Therefore, it is difficult to achieve the intended high speed production of cast-coated paper.

Moreover, the average particle size of the component (C) according to a preferred embodiment of the invention is restricted to 0.5 to 1.5 x 10⁻⁶m. The reason of this is that if the average particle size of the component (C) is less than 0.5 µm, the resulting cast-coated paper shows low permeability, many pits are formed thereon and thus, it is difficult to achieve the intended high speed production, while if it is more than 1.5 x 10⁻⁶m, the resultant cast-coated paper has a low surface strength and, therefore, printing operations cannot be carried out practically. In this respect, it should be noted that the components (B) and (C) fulfill the requirement for the average particle size of the components (B) and (C) after the preparation of the paint composition and that the average particle size of the component by itself does not necessarily fall within the above defined range before the preparation of the composition. For instance, according to a preferred embodiment of the invention a latex (B) is prepared so as to have a chemically stable particle size ranging from 0.1 to 0.3 x 10⁻⁶m and separately a latex or acrylic emulsion having a particle size ranging from 0.1 to 0.3 x 10⁻⁶m followed by flocculating it through the addition of a small amount of component (D) as specified hereinafter to control the particle size thereof to 0.5 to 1.5 x 10⁻⁶m, and then stabilizing it by adding a surfactant or a protective colloid agent to prepare the component (C). When a paint which has been obtained using the binders thus prepared is examined with a transmission electron microscope, it is confirmed, from the difference between the contrasts of the particle images, that the components (B) and (C) independently maintain their particle size at the time of preparation, respectively. In other word, the latex (B) forms denser images in which the particles exist in the distinct state, while the acrylic emulsion (C) forms less dense images in which the particles exist as aggregates composed of several particles. This method for controlling particle size is described by way of example and it may be controlled during preparing the paint. The binder such as the aforementioned latex or acryl emulsion which is converted to the latex or acrylic emulsion (C) of the invention by adding a small amount of component (D) cations or by aggregation operation during the process for preparing the paint will hereinafter be referred to as a precursor (C). It is also possible to use a component (C) whose particle size is controlled so as to fall within the above defined range during synthesizing the same, but this is not economical.

The adhesive further includes as the component (D), both at least one inorganic substance selected from the group consisting of Nacl, Na₂SO₄, ZnO and Mg0; and at least one organic acid salt selected from the group consisting of calcium, zinc and magnesium salts of formic acid or acetic acid. These additives are added to the paint composition in a small amount during preparation of the composition mainly composed of pigments, casein (A), the rubber latex (B) and the acrylic emulsion or secondary particle-forming latex (C) and selectively cause flocculation. The use of such a combination of at least one inorganic substance selected from the group consisting of NaCl, Na₂SO₄, ZnO and MgO; and at least one organic acid salt selected from the group consisting of calcium, zinc and magnesium salts of formic acid or acetic acid makes it possible to obtain a cast-coated paper having good permeability and free of pits even when it is formed according to high speed production technique and cast-coated surfaces which exhibit good gloss, high surface strength and excellent ink receptivity. Preferably, the inorganic and organic additives are composed of a combination of three components, i.e., one inorganic substances selected from the group consisting of NaCl and Na₂SO₄, one oxide selected from the group consisting of ZnO and MgO; and one organic acid salt selected from the group consisting of calcium, zinc and magnesium salts of formic acid or acetic acid.

The amount of these inorganic substances and the organic salts used is desirably determined so that the component (C) used as the synthetic binder having a particle size of 0.1 to 0.3 x 10⁻⁶m is selectively aggregated to from secondary particles and to increase the particle size of the resulting aggregates to 0.5 to 1.5 x 10⁻⁶m. In general, the amount ranges from 0.1 to 7 parts by weight for the inorganic substances and from 0.1 to 3 parts by weight for the organic salts, per 100 parts by weight of the pigment.

The components (B) and (C) used in the invention may be prepared by polymerizing or copolymerizing the foregoing monomers in the presence of a commonly used polymerization initiator such water-soluble peroxides as potassium persulfate, sodium persulfate and ammonium persulfate which may be used in combination with a water-soluble reducing agent such as sodium bisulfite, sodium sulfite and sodium thiosulfate. The polymerization reaction is generally carried out at a temperature of 50 to 100°C and a gauge pressure of 0 to 10 x 10⁵Pa (0 to 10 kg/cm²). All the monomers used in the polymerization may be added in one lot, in portions or continuously. In addition, it is also possible to add, during polymerization, such an emulsifying agent as sodium alkylbenzenesulfonates, sodium alkylsulfates and sodium alkylalcohol sulfates or such a protective colloid agent as a hydroxyethyl cellulose, carboxymethyl cellulose and polyvinyl alcohol. In this respect, the particle size of the resulting particles becomes small as the amount of the emulsifying agent with respect to the total amount of the monomers is increased and vice versa. Moreover, the molecular weight of the resultant particles may be controlled by the addition of a molecular weight controlling agent such a mercaptan as an alkylmercaptan and a tertiary mercaptan, and a higher alcohol. Thus, the binder compositions having a particle size of 0.1 to 0.3 µm and 0.5 to 1.5 µm respectively used in the present invention can be freely prepared according to the foregoing constructions and methods.

The latex and acrylic emulsion as used herein preferably contain at least a certain level of toluene insolubles (generally referred to as "gel content") of the dried film thereof which relates to the molecular weight and the degree of cross-linking of the polymer included in the latex and acryl emulsion. In order to ensure the intended high speed production, the gel content thereof is preferably not less than 15% by weight.

In addition, a protective colloid agent such as polyvinyl alcohol and hydroxyethyl cellulose, anionic surfactants, non-ionic surfactant or the like may be added to the paint composition, as a stabilizer, to stably maintain the aggregated state of the component (C) therein.

The cast-coated paper according to the present invention can be manufactured by applying a coating composition thus prepared to the surface of a base paper utilizing a known coating apparatus commonly used for manufacturing pigment-coated paper, such as an air knife coater, a roll coater or a blade coater, once drying the coated base paper, then rewetting with water and pressing the rewetted paper to a cast drum heated to a temperature of not less than 60°C at a linear pressure of not less than 10 x 10⁵Pa·cm (10 kg/cm) to dry the coated paper. The base paper is not restricted to a specific one in the present invention and may be any paper usually used for making pigment-coated paper.

The cast-coated paper thus prepared shows high surface strength and excellent gloss and has uniform surface free of pits as well as it has good ink receptivity, permeability and releasability. Thus, such a cast-coated paper can be produced according to the high speed production technique. The coating composition of the invention is useful for manufacturing the cast-coated paper according to not only the rewet cast coating technique but also the wet cast coating and gel cast coating techniques.

The present invention will hereunder be explained in more detail with reference to the following Examples and Comparative Examples, but the invention is never restricted to these Examples given below. In the following Examples and Comparative Examples, the terms "part(s)" and "%" are "part(s) by weight" and "% by weight" unless otherwise specified.

### Example 1

### (Preparation of Rubber type Latex (B))

Deionized water (120 parts), sodium dodecylbenzenesulfonate (0.2 parts), potassium persulfate (0.8 parts), t-dodecyl mercaptan (0.6 parts), and monomer components, i.e., 40 parts of butadiene, 45 parts of styrene, 8 parts of methyl methacrylate and, as functional monomers, 2 parts of acrylic acid, 2 parts of acrylamide and 3 parts of hydroxyethyl methacrylate (100 parts of monomers in all) were charged into an autoclave purged with nitrogen gas, followed by polymerizing the monomers at 70°C, stopping the polymerization 15 hours after the initiation of the polymerization at which the degree of polymerization exceeded 98%, cooling the reaction mixture, adjusting pH to 7 with sodium hydroxide to obtain a rubber type latex (B). The particle size of the resultant latex was found to be 0.15 x 10⁻⁶m.

### (Preparation of Acrylic Emulsion (C))

Deionized water (120 parts), sodium dodecylbenzenesulfonate (0.1 parts), ammonium persulfate (0.8 parts), and monomer components, i.e., 40 parts of butyl acrylate, 50 parts of styrene, 7 parts of methyl methacrylate and 3 parts of methacrylic acid (100 parts of monomers in all) were charged into a three-necked glass reactor purged with nitrogen gas, followed by polymerizing the monomers at 70°C, stopping the polymerization 8 hours after the initiation of the polymerization at which the degree of polymerization exceeded 97%, cooling the reaction mixture, adjusting pH to 7 with an aqueous ammonia solution to obtain an acryl emulsion (C). The particle size of the resultant acryl emulsion was 0.18 x 10⁻⁶m.

### (Preparation of Coating Composition)

60 Parts of an aqueous casein solution (corresponding to 9 parts expressed in the amount of solid) prepared by heating a mixture of 28% aqueous ammonia (0.9 parts), 9 parts of milk casein and 50.1 parts of water to dissolve these ingredients and 100 parts of water were charged into a Cauress mixer, followed by adding 40 parts of calcium carbonate (TP-222HS; available from OKUTAMA KOGYO CO., LTD.) and 60 parts of kaolin (UW-90; available from EMC) with stirring to admix and disperse the components and then adding 12 parts (solid content) of the rubber type latex (B) and 7 parts (solid content) of the acryl emulsion (C) previously prepared. Then, 0.3 parts of sodium chloride, 3 parts of zinc oxide and 0.7 parts of calcium acetate (solid content each) were added to the mixture, finally pH thereof was adjusted to 7 with ammonia and the solid content of the mixture was controlled to 40% to obtain a coating composition-1 for cast-coated paper according to the present invention. The viscosity of the composition was 38 mPa·s (cps) which was determined at 25°C and 60 r.p.m. using Brookfield Viscometer. The proportion of each ingredient of the composition-1, physical properties thereof and the like are listed in Table I given below.

### Examples 2 to 10

Coating compositions 2 to 10 were prepared according to the same procedures and conditions as in Example 1 except for changing the amount of casein used, the amount of the rubber type latex (B) and the acryl emulsion (C), the total amount of these binders and the amount of sodium chloride, zinc oxide and calcium acetate to those listed in Table I. The solid contents and Brookfield viscosities of these coating compositions were determined in the same manner as in Example 1 and the results obtained were summarized in Table I.

### Comparative Examples 1 to 9

Coating compositions 1 to 9 were prepared according to the same procedures and conditions as in Example 1 except for changing the amount of chloride, zinc oxide and calcium acetate, the amount of casein used and the amount of the rubber type latex (B) and the acryl emulsion (C), and the total amount of these two binders to those listed in Table I. A coating composition 9 was prepared according to the same procedures and conditions as in Example 1 except that inorganic additives were not used and that calcium acetate was used. The solid contents and Brookfield viscosities of these paint compositions are also summarized in Table I.

### Comparative Examples 10 and 11

In these Comparative Examples, there are illustrated experiments in which the rubber type latex (B) and the acryl emulsion (C) are separately employed in the compositions in order to make the effectiveness of the simultaneous use of these two synthetic binders more clear. In other words, Comparative compositions 10 and 11 were prepared according to the same procedures and conditions as in Example 1 except that the amount of calcium acetate was changed and that the rubber type latex (B) and the acryl emulsion (C) were separately used in the amount equal to the total amount of these two binders in Example 1. The solid content of these paints and Brookfield viscosity thereof are also listed in Table I.

### Test Example

Each of the coating compositions obtained in the foregoing Examples and Comparative Examples was applied to the surface of base paper having a basis weight of 64.0 g/m² with an air-knife coater in an amount of 25 g/m² (weighed after drying), was dried, was supplied with a rewetting solution and then passed through a casting drum. The casting was carried out utilizing a drum having a diameter of 1,2 m (1200 mm), at a linear pressure of 50 x 10⁵Pa·cm (kg/cm) and a surface temperature of 95 to 100°C to obtain maximum casting speed at which good releasability are maintained and no pits are formed on the paper surface. In addition, the permeability of the coated paper prior to casting was determined and the gloss and surface strength of the resultant cast-coated papaer were estimated. The results thus obtained are listed in Table II given below. In this respect, the permeability was determined with a permeability Tester (developed by OKEN) and the gloss was determined in accordance with JIS P-8142. The ink receptibity was determined by RI Printing Tester (available from AKIRA MANUFACTURING CO.) and measuring ink receptive density on the printed surface with Macbeth type ink densitometer (available from TOKYO DENSHOKU CO., LTD.). The results obtained are listed in Table II.

### Example 11

### (Preparation of Rubber type Latex (B))

Deionized water (120 parts), sodium dodecylbenzenesulfonate (0.2 parts), potassium persulfate (0.8 parts), t-dodecyl mercaptan (0.6 parts), and monomer components, i.e., 40 parts of butadiene, 45 parts of styrene, 8 parts of methyl methacrylate and, as functional monomers, 2 parts of acrylic acid, 2 parts of acrylamide and 3 parts of hydroxyethyl methacrylate (100 parts of monomers in all) were charged into an autoclave purged with nitrogen gas, followed by polymerizing the monomers at 70°C, stopping the polymerization 15 hours after the initiation of the polymerization at which the degree of polymerization exceeded 98%, cooling the reaction mixture, adjusting pH to 7 with sodium hydroxide to obtain a rubber type latex (B). The particle size of the latex was found to be 0.15 µm.

### (Preparation of Secondary Particle-Forming Latex (C))

Deionized water (120 parts), sodium

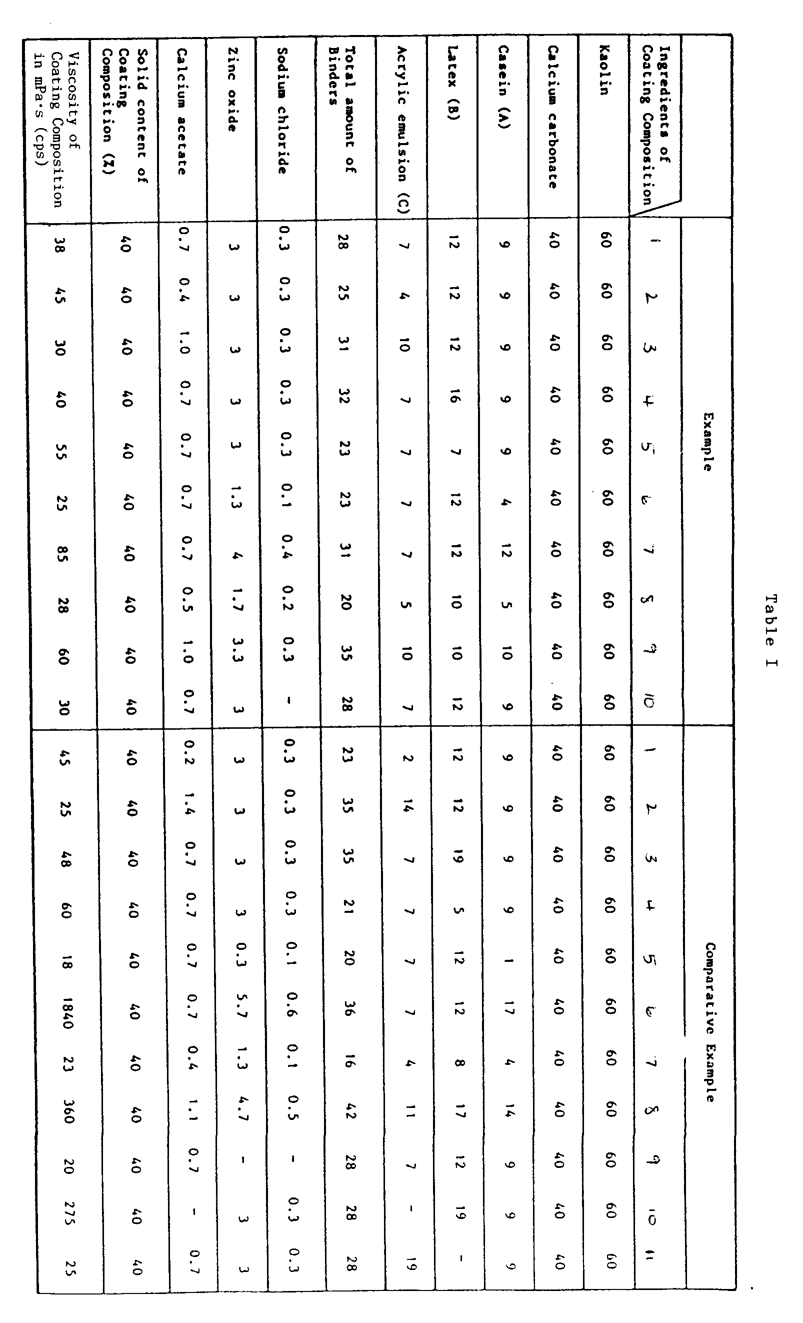

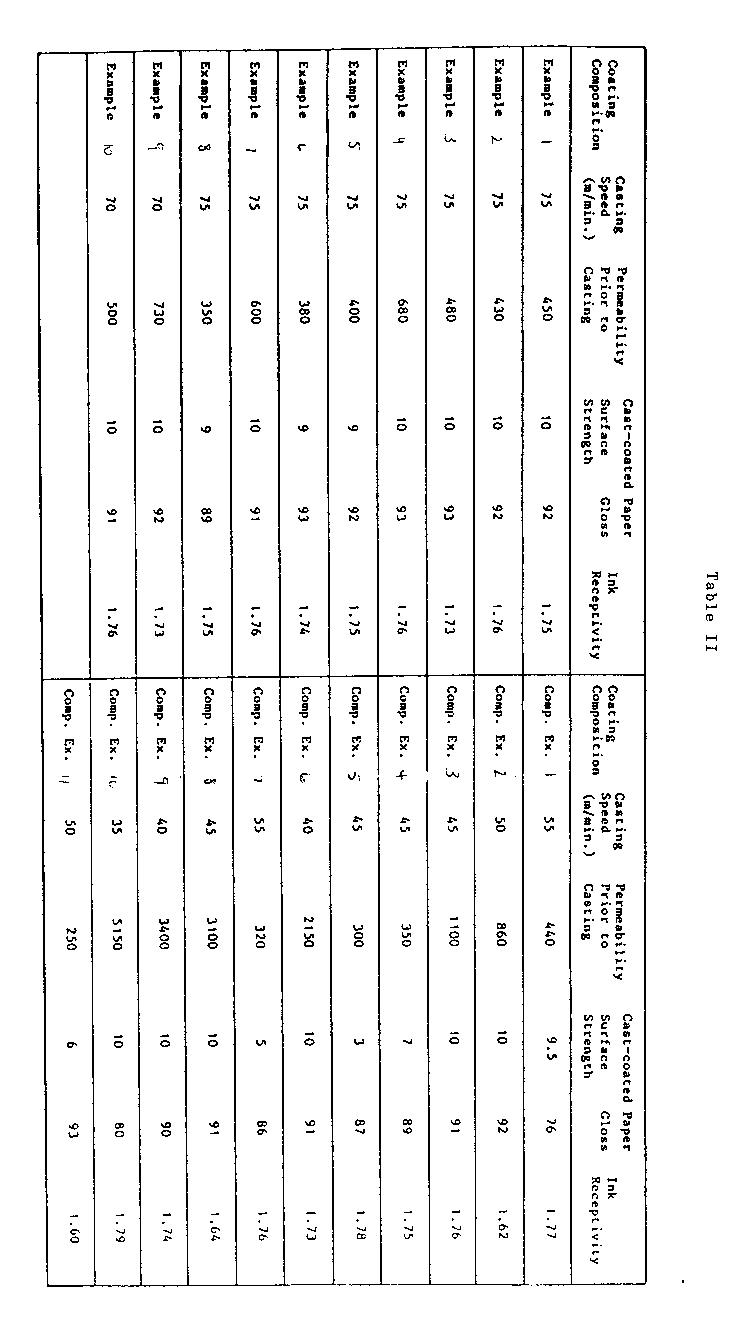

dodecylbenzenesulfonate (0.1 parts), ammonium persulfate (0.8 parts), t-dodecyl mercaptan (0.4 parts), and monomer components, i.e., 25 part of butadiene, 64 parts of styrene, 7 parts of methyl methacrylate, 3 parts of methacrylic acid and 1 part of methylolmethacrylamide (100 parts of monomers in all) were charged into an autoclave purged with nitrogen gas, followed by polymerizing the monomers at 70°C, stopping the polymerization 13 hours after the initiation of the polymerization at which the degree of polymerization exceeded 98%, cooling the reaction mixture, adjusting pH to 7 with an aqueous ammonia solution to obtain a secondary particle-forming latex (C). The particle size of the resultant latex was 0.19 x 10⁻⁶m.

### (Preparation of Coating Composition)

60 Parts of an aqueous casein solution (corresponding to 9 parts expressed in the amount of solid) prepared by heating a mixture of 28% aqueous ammonia (0.9 parts), 9 parts of milk casein and 50.1 parts of water to dissolve these ingredients and 100 parts of water were charged into a Kowles mixer, followed by adding 40 parts of calcium carbonate (TP-222HS; available from OKUTAMA KOGYO CO., LTD.) and 60 parts of kaolin (UW-90; available from EMC) with stirring to admix and disperse the components and then adding 12 parts (solid content) of the rubber type latex (B) and 7 parts (solid content) of the secondary particle-forming latex (C) previously prepared. Then, 0.3 parts of sodium chloride, 3 parts of zinc oxide and 0.7 parts of calcium acetate (solid content each) were added to the mixture, finally pH thereof was adjusted to 8.0 with ammonia and the solid content of the paint was controlled to 40% to obtain a composition-11 for cast-coated paper according to the present invention. The viscosity of the composition was 45 mPa·s (cps) which was determined at 25°C and 60 r.p.m. using Brookfield Viscometer. The proportion of each ingredient of the composition-11, physical properties thereof and the like are listed in Table III given below.

### Examples 12 to 20

Coating compositions 12 to 20 were prepared according to the same procedures and conditions as in Example 11 except for changing the amount of casein used, the amount of the rubber type latex (B) and the secondary particle-forming latex (C), the total amount of these binders and the amount of sodium chloride, zinc oxide and calcium acetate to those listed in Table III. The solid contents and Brookfield viscosities of these compositions were determined in the same manner as in Example 11 and the results obtained were summarized in Table III.

### Comparative Examples 11 to 19

Comparative coating compositions 11 to 18 were prepared according to the same procedures and conditions as in Example 11 except that the amounts of sodium chloride, zinc oxide and calcium acetate were changed as listed in Table III and that the amount of casein used and the amount of the rubber type latex (B) and the secondary particle-forming latex (C) as well as the total amount of these binders used were outside the range of this invention as shown in Table III. A comparative composition 19 was prepared according to the same procedures and conditions as in Example 11 except that inorganic additives were not used and that calcium acetate was used instead. The solid contents and Brookfield viscosities of these comparative compositions are also summarized in Table III.

### Comparative Examples 20 and 21

In these Comparative Examples, there are illustrated experiments in which the rubber type latex (B) and the secondary particle-forming latex (C) are separately employed in the compositions in order to make the effectiveness of the simultaneous use of these two synthetic binders more clear. In other words, comparative compositions 20 and 21 were prepared according to the same procedures and conditions as in Example 33 except that the amount of calcium acetate was changed as shown in Table III and that the latexes (B) and (C) were separately used in the amount equal to the total amount of these two binders in Example 12. The solid content of these coating compositions and Brookfield viscosity thereof are also listed in Table III.

### Test Example

Cast-coated paper was prepared using the compositions obtained in the foregoing Examples and Comparative Examples in the same manner as in the aforementioned Test Example and casting speed, permeability, glossiness, surface strength and ink receptivity were likewise determined. The results thus obtained are summarized in Table IV given below.

As seen from the data listed in Tables III and IV, according to the coating compositions of the present invention in which each component fulfills the corresponding requirements, there are provided cast-coated papers having well-balanced qualities such as gloss, surface strength and permeability regardless of the paper being prepared by high speed production technique. This clearly indicates that the coating compositions according to the present invention are very useful ones for preparing the cast-coated paper, quite unlike the conventional ones.

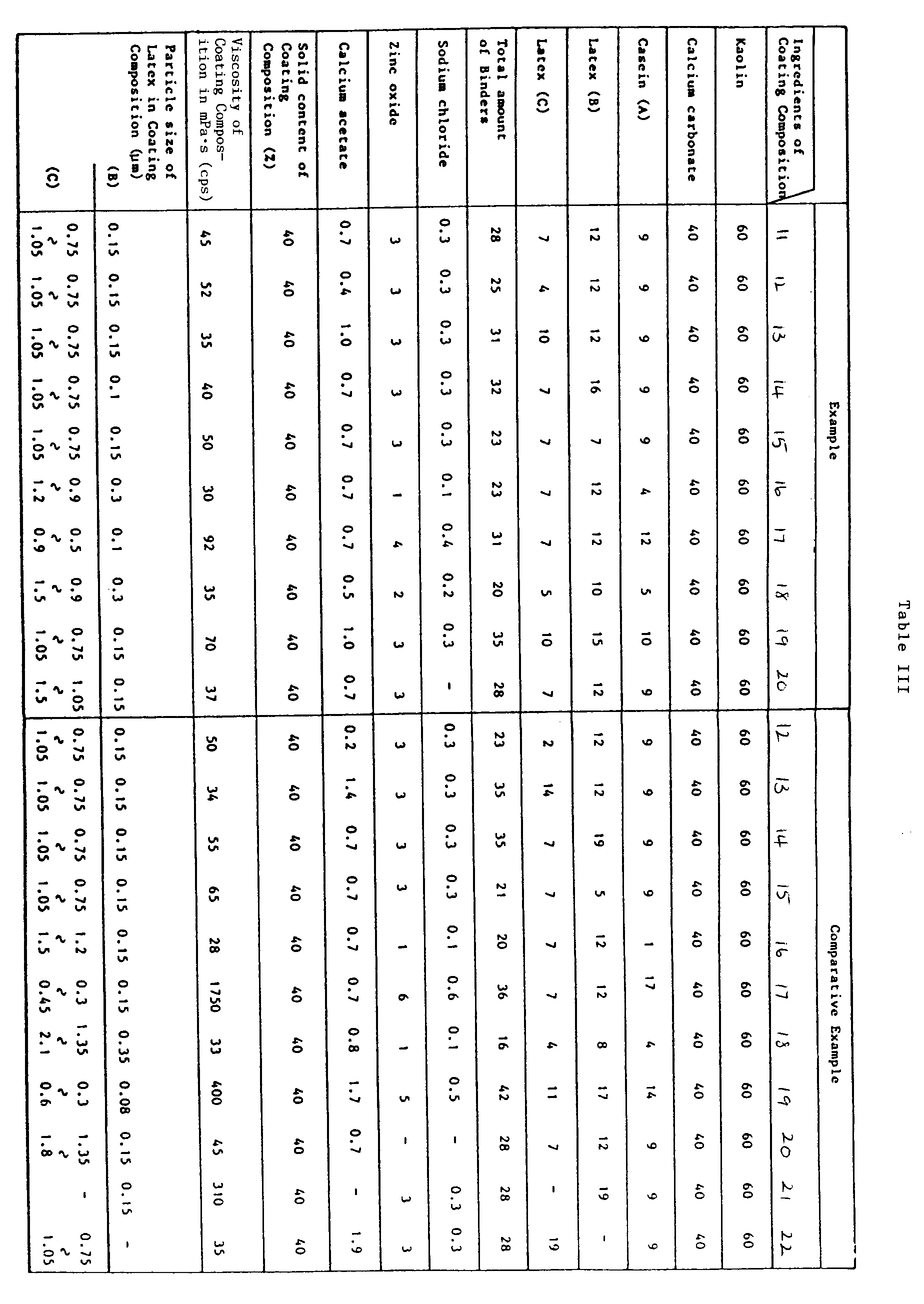

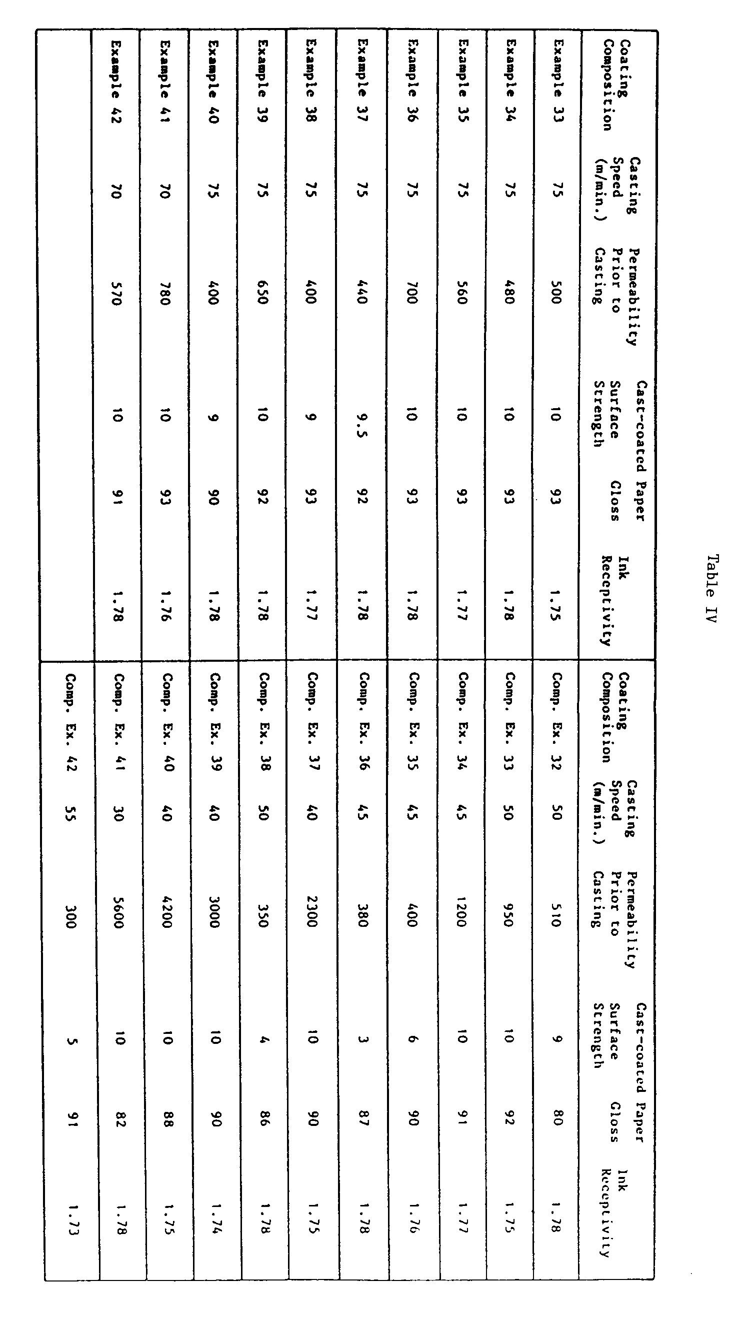

## Claims

1. A paper coating composition for the cast-coating process which comprises mainly a pigment and an adhesive, characterized in that the adhesive comprises per 100 parts by weight of the pigment, (A) 2 to 15 parts by weight of casein; (B) 6 to 18 parts by weight, expressed as solids content, of a rubber latex having an average particle size ranging from 0.1 to 0.3 µm; (C) 3 to 12 parts by weight, expressed as solids content, of an acrylic emulsion or a secondary particle-forming rubber latex having an average particle size ranging from 0.1 to 0.3 µm; and (D) at least one inorganic compound selected from the group consisting of NaCl, Na₂SO₄, ZnO and MgO and at least one organic acid salt selected from the group consisting of formates and acetates of calcium, zinc and magnesium, the total amount of the components (A), (B) and (C) being in the range of 18 to 40 parts by weight.

2. The coating composition according to claim 1 wherein the latexes as the components (B) and (C) are rubber emulsions of polymers having repeating units derived from diene type monomers as essential units.

3. The coating composition according to claim 1 or 2 wherein the acrylic emulsion as the component (C) is an emulsion of a polar having repeating units derived from at least one monomer selected from the group consisting of aromatic alkenyl compounds and monoolefinic unsaturated compounds as principal repeating units.

4. The coating composition according to any of the claims 1 to 3 wherein the amount of the component (D) composed of the inorganic and organic compounds to be added to the composition is controlled to such level that the component (C) used as the synthetic binder having a particle size of 0.1 to 0.3 µm is selectively aggregated to form secondary particles and to increase the particle size of the resulting aggregates to 0.5 to 1.5 µm.

5. The coating composition according to claim 4 wherein the amount of the inorganic compound ranges from 0.1 to 7 parts by weight and the amount of the organic acid salt ranges from 0.1 to 3 parts by weight, per 100 parts by weight of the pigment.

6. A cast-coated paper obtained by applying, to the surface of a base paper, the coating composition according to any of the claims 1 to 5.

## Patentansprüche

1. Zusammensetzung zur Beschichtung von Papier für das Kontaktverfahren, welche hauptsächlich ein Pigment und einen Klebstoff umfaßt, dadurch gekennzeichnet, daß der Klebstoff, bezogen auf 100 Gewichtsteile des Pigments, enthält:
(A) 2 bis 15 Gewichtsteile Casein;
(B) 6 bis 18 Gewichtsteile, ausgedrückt als Feststoffgehalt, eines Kautschuklatex mit einem mittleren Teilchendurchmesser im Bereich von 0,1 bis 0,3 µm;
(C) 3 bis 12 Gewichtsteile, ausgedrückt als Feststoffgehalt, einer Acryl-Emulsion oder eines Sekundärteilchen bildenden Kautschuklatex mit einem mittleren Teilchendurchmesser im Bereich von 0,1 bis 0,3 µm; und
(D) zumindest eine anorganische Verbindung, welche ausgewählt ist aus der Gruppe bestehend aus NaCl, Na₂SO₄, ZnO und MgO, und mindestens ein Salz einer organischen Säure, welches ausgewählt ist aus der Gruppe bestehend aus Formiaten und Acetaten des Calciums, Zinks und Magnesiums,
wobei die Gesamtmenge der Komponenten (A), (B) und (C) im Bereich von 18 bis 40 Gewichtsteilen liegt.

2. Beschichtungs-Zusammensetzung gemäß Anspruch 1, worin die Latices als Komponenten (B) und (C) Kautschuk-Emulsionen von Polymeren sind, die, als wesentliche Einheiten, sich von Monomeren vom Dien-Typ ableitende wiederkehrende Einheiten aufweisen.

3. Beschichtungs-Zusammensetzung gemäß Anspruch 1 oder 2, worin die Acryl-Emulsion als Komponente (C) eine Emulsion eines Polymers ist, das Einheiten als hauptsächliche wiederkehrende Einheiten aufweist, die sich von zumindest einem Monomer ableiten, welches aus der aus aromatischen Alkenylverbindungen und monoolefinisch ungesättigten Verbindungen betehenden Gruppe ausgewählt ist.

4. Beschichtungs-Zusammensetzung gemäß einem der Ansprüche 1 bis 3, worin die Menge der aus anorganischen und organischen Verbindungen bestehenden Komponente (D), welche zur Zusammensetzung zugegeben wird, auf einen solchen Gehalt eingestellt wird, daß die als synthetisches Bindemittel verwendete Komponente (C) mit einer Teilchengröße von 0,1 bis 0,3 µm unter Bildung von Sekundärteilchen selektiv aggregiert und sich die Teilchengröße der resultierenden Aggregate auf 0,5 bis 1,5 µm erhöht.

5. Beschichtungs-Zusammensetzung gemäß Anspruch 4, worin, bezogen auf 100 Gewichtsteile des Pigments, die Menge der anorganischen Verbindung 0,1 bis 7 Gewichtsteile beträgt, und die Menge des Salzes der organischen Säure 0,1 bis 3 Gewichtsteile beträgt.

6. Durch Kontaktverfahren hergestelltes Papier, welches durch Aufbringen der Beschichtungs-Zusammensetzung gemäß einem der Ansprüche 1 bis 5 auf die Oberfläche eines Basispapiers erhalten wird.

## Revendications

1. Une composition de revêtement du pour le procédé d'enduction par coulée qui comprend principalement un pigment et un adhésif, caractérisée en ce que l'adhésif comprend pour 100 en poids de pigment, (A) 2 à 15 parties en poids de caséine ; (B) 6 à 18 parties en poids exprimées en teneur en solides d'un latex de caoutchouc ayant un intervalle de tailles moyennes de particules de 0.1 à 0.3 µm; (C) 2 à 12 parties en poids, exprimées en teneur en solides, d'une émulsion acrylique ou d'un latex caoutchouc secondaire formant des particules ayant un intervalle de tailles moyennes de particules de 0,1 à 0,3 µm; et (D) au moins un composé organique choisi dans le groupe comprenant NaCl, Na₂SO₄, ZnO et MgO et au moins un sel d'acide organique choisi dans le groupe comprenant les formiates et les acétates de calcium de zinc et de magnésium, la quantité totale des composants (A), (B) et (C) étant dans l'intervalle de 18 à 40 parties en poids.

2. La composition de revêtement selon la revendication 1, selon laquelle les latex des composants (B) et (C) sont des émulsions caoutchouteuses de polymères ayant des unités de récurrence dérivées de monomères du type diène comme unités essentielles.

3. La composition de revêtement selon la revendication 1 ou 2, selon laquelle l'émulsion acrylique en tant que composant (C) est une émulsion d'un polymère ayant des unités de récurrence dérivées d'au moins un monomère choisi dans le groupe comprenant les composés alcényles aromatiques et les composés insaturés monooléfiniques comme unités de récurrence principales.

4. La composition de revêtement selon l'une des revendications 1 à 3, selon laquelle la quantité du composant (D) constitué de composés inorganiques et organiques à ajouter à la composition est contrôlée à un niveau tel que le composant (C) utilisé en tant que liant synthétique ayant une taille de particules de 0,1 à 0,3 µm est agrégé sélectivement pour former des particules secondaires et pour accroître la taille de particules des agrégats résultants à 0,5 à 1,5 µm.

5. La composition de revêtement selon la revendication 4, selon laquelle la quantité de composé inorganique est dans l'intervalle de 0,1 à 7 parties a poids et la quantité du sel d'acide organique est dans l'intervalle de 0,1 à 3 parties en poids, pour 100 parties en poids de pigment.

6. Un papier revêtu par coulée obtenu par application à la surface d'un papier de base, de la composition de revêtement selon l'une quelconque des revendications 1 à 5.
